(19) **Europäisches Patentamt**
**European Patent Office**
**Office européen des brevets**

(11) **EP 3 795 378 B1**

(12) **EUROPEAN PATENT SPECIFICATION**

(45) Date of publication and mention
of the grant of the patent:
**20.07.2022 Bulletin 2022/29**

(21) Application number: **20196041.6**

(22) Date of filing: **14.09.2020**

(51) International Patent Classification (IPC):
**B60C 1/00** *(2006.01)* **B60C 11/03** *(2006.01)*
**B60C 11/11** *(2006.01)* **B60C 11/12** *(2006.01)*

(52) Cooperative Patent Classification (CPC):
**B60C 11/11; B60C 1/0016; B60C 11/0306;**
**B60C 11/033; B60C 11/0332;** B60C 2011/0344;
B60C 2011/0346; B60C 2011/0348;
B60C 2011/1213; B60C 2200/06

(54) **HEAVY DUTY TIRE**

SCHWERLASTREIFEN

PNEU POUR FONCTIONNEMENT INTENSIF

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.09.2019 JP 2019170572**

(43) Date of publication of application:
**24.03.2021 Bulletin 2021/12**

(73) Proprietor: **Sumitomo Rubber Industries, Ltd.**
**Kobe-shi, Hyogo-ken 651-0072 (JP)**

(72) Inventors:
• **KAJITA, Hisataka**
**Kobe-shi Hyogo 651-0072 (JP)**

• **HABA, Toshifumi**
**Kobe-shi Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 799 480** **EP-A1- 3 023 269**
**EP-A1- 3 042 790** **WO-A1-2019/092365**
**JP-A- 2019 026 712** **JP-A- 2019 131 649**
**JP-A- 2019 151 743** **US-A- 5 042 546**
**US-A1- 2019 061 425**

**Description**

TECHNICAL FIELD

The present invention relates to a heavy duty tire which is good in the balance between its fuel efficiency, wet grip performance, abrasion resistance, and chipping resistance.

BACKGROUND ART

As a means to improve abrasion resistance of a tire for a truck/bus, a technique for micronizing or high-structuring carbon black is known (for example, Patent Document 1). Patent Document 2 discloses a tire for heavy vehicles, with a tread formed of a rubber composition which contains 50 phr of a silica having an $N_2SA$ of 220 $m^2/g$ and a rubber component consisting of natural rubber and styrene-butadiene rubber. Patent Document 3 discloses tread rubber compositions containing natural rubber, styrene-butadiene rubber, 65 or 74 phr of silica, and 4 phr of a polyterpene resin. Patent Document 4 discloses tires wherein the tread rubber composition comprises natural rubber, styrene rubber, butadiene rubber, and 10 or 20 phr of silica having a specific surface area of 175 $m^2/g$. Patent Document 5 discloses tires, the tread rubber composition of which contains natural rubber, butadiene rubber, 25 phr of a terpene resin, and 50 phr of silica having a specific surface area of 175 $m^2/g$. Patent Document 6 discloses heavy-duty tires, the tread of which is formed of a rubber composition comprising natural rubber, styrene-butadiene rubber, butadiene rubber, 5 to 15 phr of resins, and 88 or 120 phr of silica having an $N_2SA$ of 175 $m^2/g$. Patent Document 7 discloses a tire tread made of a rubber composition containing natural rubber, styrene-butadiene rubber, 20 phr of a terpene resin and 70 phr of silica having an $N_2SA$ of 175 $m^2/g$. In Patent Documents 8 to 10, tread patterns for heavy-duty tires are described.

PRIOR ART DOCUMENTS

Patent Documents

Patent Document 1: JP H06-279624 A
Patent Document 2: WO 2019/092365 A1
Patent Document 3: US 2019/0061425 A1
Patent Document 4: JP 2019-131649 A
Patent Document 5: JP 2019-151743 A
Patent Document 6: JP 2019-026712 A
Patent Document 7: EP 2 799 480 A1
Patent Document 8: EP 3 042 790 A1
Patent Document 9: EP 3 023 269 A1
Patent Document 10: US 5,042,546 A

SUMMARY OF THE INVENTION

PROBLEM TO BE SOLVED BY THE INVENTION

The above-described approach to micronize or high-structure carbon black is not sufficient in terms of improving fuel efficiency. Furthermore, dispersibility of carbon black may deteriorate due to deterioration of processability associated with micronization, conversely deteriorating abrasion resistance of a tire. Therefore, there has been a limit for the conventional approach to enhance performance by improving carbon black.

Furthermore, from influence of recent environmental regulations, there has been a growing demand for highly satisfying abrasion resistance, as well as fuel efficiency, wet grip performance, chipping resistance, etc. even for a tire for a truck/bus.

An object of the present invention is to provide a heavy duty tire which is good in the balance between its fuel efficiency, wet grip performance, abrasion resistance, and chipping resistance.

MEANS TO SOLVE THE PROBLEM

As a result from intensive studies, the present inventors have found that a heavy duty tire comprising a tread composed of a rubber composition comprising a predetermined rubber components, a predetermined silica, and an adhesive resin, and having a predetermined range of difference between a ratio of a circumferential groove area to a contact area and a ratio of a transverse groove area to the contact area are good in the balance between its fuel efficiency, wet grip performance, abrasion resistance, and chipping resistance, and completed the present invention.

That is, the present invention relates to:

[1] A heavy duty tire comprising a tread composed of a rubber composition comprising 20 parts by mass or more of a silica having 175 m$^2$/g or more of a nitrogen adsorption specific surface area (N$_2$SA) as measured by a BET method according to ASTM D3037-93 and 4.0 parts by mass or more of an adhesive resin based on 100 parts by mass of a rubber component,

wherein the rubber composition comprises an isoprene-based rubber and at least one of a styrene butadiene rubber and a butadiene rubber, and
the tread has 3.0% or more and 7.0% or less of difference between a ratio S1 of a circumferential groove area to a contact area and a ratio S2 of a transverse groove area to the contact area,
wherein the transverse groove is a groove or sipe where a straight line joining both ends in a width direction is inclined at an angle of 0 to 30° relative to a tire width direction, and
wherein the difference between S1 and S2 is measured when the tread is pressed against a plane surface with a normal load applied thereto in a normal state where it is mounted to a normal rim and inflated to a normal internal pressure, the normal rim being a rim defined for the tire by a standard on which the tire is based, the normal inner pressure being a pneumatic pressure defined for the tire by the standard, and the normal load being a load defined for the tire by the standard.

[2] The heavy duty tire of the above [1], wherein the styrene-butadiene rubber has a styrene content of 5 to 25% by mass, a vinyl content of 10 to 45 mol%, and a weight-average molecular weight of 200,000 or more,
[3] The heavy duty tire of the above [1] or [2], wherein the rubber composition comprises 8 to 18 parts by mass of a silane coupling agent having a sulfide group based on 100 parts by mass of the silica, and
[4] The heavy duty tire of any of the above [1] to [3], wherein the adhesive resin is at least one selected from the group consisting of a C5-based petroleum resin, a C5-C9-based petroleum resin, a C9-based petroleum resin, a terpene-based resin, and a rosin-based resin.

EFFECTS OF THE INVENTION

A heavy duty tire comprising a tread composed of a rubber composition comprising a predetermined rubber components, a predetermined silica, and an adhesive resin, and having a predetermined range of difference between a ratio of a circumferential groove area to a contact area and a ratio of a transverse groove area to the contact area are good in the balance between its fuel efficiency, wet grip performance, abrasion resistance, and chipping resistance.

BRIEF DESCRIPTION OF THE DRAWINGS

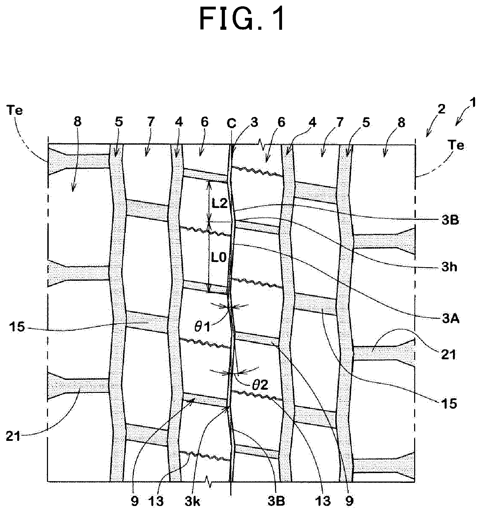

FIG. 1 is a development of a tread pattern of the heavy duty tire according to an embodiment of the present invention being developed on a plane surface.

EMBODIMENT FOR CARRYING OUT THE INVENTION

The heavy duty tire according to the present invention relates to a tire comprising a tread composed of a rubber composition comprising a predetermined rubber components, a predetermined silica, and an adhesive resin, and having 3.0% or more and 7.0% or less of difference between a ratio S1 of a circumferential groove area to a contact area and a ratio S2 of a transverse groove area to the contact area. Without intending to be limited by theory, for example, the following will be considered as a mechanism where the effects of the present invention are exerted.

By dispersing a styrene-butadiene rubber (SBR) or a butadiene rubber (BR) in a isoprene-based rubber, impact during running is mitigated. Furthermore, by containing a predetermined amount of silica having 175 m$^2$/g or more of a nitrogen adsorption specific surface area (N$_2$SA), such fine particulate silica enters a gap between carbon blacks, and a rubber, carbon black, and silica interact with each other very strongly, while maintaining the low heat generation performance without affecting aggregation between the silica particles, so that it is considered that durability performance and abrasion resistance further improve.

Furthermore, by containing a predetermined amount of an adhesive resin, the adhesive resin interacts with the isoprene-based rubber, improving the breaking elongation and the chipping resistance. Moreover, it is considered that the fuel efficiency improves by lowering the compounding viscosity of the rubber composition and improving the dispersibility of a filler (carbon black, silica, etc.) during kneading.

Moreover, by having 3.0% or more of difference (S1-S2) between a ratio S1 of a circumferential groove area to a contact area and a ratio S2 of a transverse groove area to the contact area, the rigidity of the tire tread part increases, so that both abrasion resistance and chipping resistance can be highly achieved.

The heavy duty tire including production of a rubber composition for a tread which is an embodiment of the present invention will be described in detail below. However, the following description is illustrative for describing the present invention and not intended to limit the technical scope of the present invention to the scope of this description. In addition, in the present specification, when a numerical range is indicated by using "to", numerical values at both ends thereof shall be included.

[Rubber composition for tread]

The tire according to the present invention comprises a tread composed of a rubber composition comprising 20 parts by mass or more of a silica having 175 $m^2$/g or more of a nitrogen adsorption specific surface area ($N_2SA$) and 4.0 parts by mass or more of an adhesive resin based on 100 parts by mass of a rubber component, wherein the rubber component comprises an isoprene-based rubber and at least one of a styrene butadiene rubber, and a butadiene rubber.

The rubber composition for a tread according to the present invention preferably comprises a styrene-butadiene rubber having a styrene content of 5 to 25% by mass, a vinyl content of 10 to 45 mol%, and a weight-average molecular weight of 200,000 or more of the styrene-butadiene rubber.

The rubber composition for a tread according to the present invention preferably comprises 8 to 18 parts by mass of a silane coupling agent having a sulfide group based on 100 parts by mass of a silica.

The rubber composition for a tread according to the present invention is preferably comprises at least one adhesive resin selected from the group consisting of a C5-based petroleum resin, a C5-C9-based petroleum resin, a C9-based petroleum resin, a terpene-based resin, and a rosin-based resin.

<Rubber component>

The rubber composition for a tread according to the present invention comprises an isoprene-based rubber and at least one of a styrene-butadiene rubber (SBR) and a butadiene rubber (BR) as rubber components. The rubber component may be a rubber component comprising an isoprene-based rubber, a SBR and a BR, may be a rubber component consisting of only an isoprene-based rubber, a SBR and a BR, may be a rubber component consisting of only an isoprene-based rubber and a SBR, and may be a rubber component consisting of only an isoprene-based rubber and a BR.

(Isoprene-based rubber)

As an isoprene-based rubber, for example, those which are common in the tire industry such as an isoprene rubber (IR) and a natural rubber can be used. The natural rubber includes unmodified natural rubbers (NR), as well as modified natural rubbers such as an epoxidized natural rubber (ENR), a hydrogenated natural rubber (HNR), a deproteinized natural rubber (DPNR), an ultrapure natural rubber (UPNR), and a grafted natural rubber. These rubbers may be used alone, or two or more thereof may be used in combination.

Examples of the NR include, but not particularly limited to, those which are common in the tire industry, for example, SIR20, RSS#3, TSR20 and the like.

A content of the isoprene-based rubber in the rubber component is preferably 20% by mass or more, more preferably 25% by mass or more, further preferably 30% by mass or more, and particularly preferably 35% by mass or more, from the viewpoint of chipping resistance. On the other hand, it is preferably 80% by mass or less, more preferably 75% by mass or less, further preferably 70% by mass or less, and particularly preferably 65% by mass or less, from the viewpoint of wet grip performance.

(SBR)

Examples of the SBR include, but not particularly limited to, a solution-polymerized SBR (S-SBR), an emulsion-polymerized SBR (E-SBR), modified SBRs thereof (a modified S-SBR, a modified E-SBR) and the like. Examples of the modified SBR include an end-modified and/or main chain-modified SBR, a modified SBR coupled with a tin or silicon compound, etc. (condensates, those having a branched structure, etc.) and the like. Among them, the E-SBR is preferable from the viewpoint of its capability of well improving fuel efficiency and abrasion resistance. These SBRs may be used alone, or two or more thereof may be used in combination.

A styrene content of the SBR is preferably 5% by mass or more, more preferably 10% by mass or more, and further preferably 15% by mass or more, from the viewpoints of wet grip performance and abrasion resistance. Furthermore, it is preferably 25% by mass or less, and more preferably 24% by mass or less, from the viewpoints of temperature dependence of the grip performance and abrasion resistance. It is noted that in the present specification, the styrene content of the SBR is calculated by $^1$H-NMR measurement.

A vinyl content of the SBR is preferably 10 mol% or more, more preferably 13 mol% or more, and further preferably 16 mol% or more, from the viewpoints of guarantee for reactivity with silica, rubber strength and abrasion resistance. Furthermore, the vinyl content of the SBR is preferably 45 mol% or less, more preferably 40 mol% or less, and further preferably 35 mol% or less, from the viewpoints of prevention of increase in temperature dependence, wet grip performance, breaking elongation, and abrasion resistance. It is noted that in the present specification, the vinyl content of the SBR (1,2-bonded butadiene unit amount) is measured by infrared absorption spectrometry.

The weight-average molecular weight (Mw) of the SBR is preferably 200,000 or more, more preferably 300,000 or more, and further preferably 500,000 or more, from the viewpoint of abrasion resistance. Furthermore, the Mw is preferably 2,500,000 or less, and more preferably 2,000,000 or less, from the viewpoints of crosslinking uniformity, etc. It is noted that the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

When the rubber component comprises the SBR, the content thereof in the rubber component is preferably 5% by mass or more, more preferably 10% by mass or more, further preferably 15% by mass or more, and particularly preferably 20% by mass or more, from the viewpoints of chipping resistance and wet grip performance. Furthermore, it is preferably 80% by mass or less, more preferably 70% by mass or less, further preferably 60% by mass or less, and particularly preferably 50% by mass or less, from the viewpoint of abrasion resistance.

(BR)

The BR is not particularly limited, and those which are common in the tire industry can be used such as, for example, a BR having a content of cis-1,4 bond of less than 50% (a low cis BR), a BR having a content of cis 1,4 bond of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR).

The content of cis-1,4 bond in the high cis BR is preferably 95% or more, and more preferably 97% or more. Examples of the high cis BR include, for example, BR1220 manufactured by Zeon Corporation, BR130B, BR150B, BR150L manufactured by Ube Industries, Ltd., and BR730 manufactured by JSR Corporation, and the like. Low-temperature property and abrasion resistance can be improved by containing the high cis BR. Examples of the rare-earth-based BR include, for example, BUNA-CB25 manufactured by LANXESS, and the like.

Examples of the SPB-containing BR include those in which 1,2 syndiotactic polybutadiene crystal is dispersed after chemically bonded with BR, but not those in which the crystal is simply dispersed in the BR. Examples of Such SPB-containing BR include VCR-303, VCR-412, VCR-617 manufactured by Ube Industries, Ltd, and the like.

Examples of the modified BR include those obtained by adding a tin compound after polymerizing 1,3 butadiene by a lithium initiator and further with which the end of the modified BR molecule is bonded by tin-carbon bond (a tin-modified BR), a butadiene rubber having a condensed alkoxysilane compound at its active end (a modified BR for silica), and the like. Examples of such modified BR include, for example, BR1250H (tin-modified) manufactured by ZS Elastomers Co., Ltd., a S-modified polymer (modified for silica), and the like.

The weight-average molecular weight (Mw) of the BR is preferably 300,000 or more, more preferably 350,000 or more, and further preferably 400,000 or more, from the viewpoints of abrasion resistance and grip performance, etc. Furthermore, it is preferably 2,000,000 or less, and more preferably 1,000,000 or less, from the viewpoints of crosslinking uniformity, etc. It is noted that the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

When the rubber component comprises the BR, the content thereof in the rubber component is preferably 5% by mass or more, more preferably 10% by mass or more, further preferably 15% by mass or more, and particularly preferably 20% by mass or more, from the viewpoint of abrasion resistance. Furthermore, it is preferably 40% by mass or less, more preferably 35% by mass or less, further preferably 30% by mass or less, and particularly preferably 25% by mass or less, from the viewpoint of wet grip performance.

(Other rubber components)

As the rubber component according to the present invention, the rubber composition may comprise rubber components other than the above-described isoprene-based rubbers, SBRs and BRs. As other rubber components, crosslinkable rubber components generally used in the rubber industry can be used, such as, for example, a styrene-isoprene-butadiene copolymer rubber (SIBR), a styrene-isobutylene-styrene block copolymer (SIBS), a chloroprene rubber (CR), a acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination.

<Filler>

The rubber composition for a tread according to the present invention comprises a silica as a filler. It also preferably comprises a carbon black.

(Silica)

By compounding silica in the rubber composition for a tread according to the present invention, fuel efficiency, abrasion performance, and steering stability during high speed running can be improved. Silica is not particular limited, and those which are common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Silica may be used alone, or two or more thereof may be used in combination.

The nitrogen adsorption specific surface area ($N_2SA$) of silica is 175 $m^2$/g or more, preferably 180 $m^2$/g or more, more preferably 190 $m^2$/g or more, and further preferably 200 $m^2$/g or more, from the viewpoint of abrasion resistance. Furthermore, it is preferably 350 $m^2$/g or less, more preferably 300 $m^2$/g or less, and further preferably 250 $m^2$/g or less, from the viewpoints of fuel efficiency and processability. It is noted that the $N_2SA$ of silica in the present specification is a value measured by a BET method according to ASTM D3037-93.

The content of silica is, from the viewpoints of improvement in balance of the fuel efficiency and wet grip performance, 20 parts by mass or more, preferably 25 parts by mass or more, and more preferably 30 parts by mass or more based on 100 parts by mass of the rubber component. Furthermore, it is preferably 150 parts by mass or less, more preferably 130 parts by mass or less, and further preferably 110 parts by mass or less, from the viewpoint of suppressing lowering in fuel efficiency and abrasion resistance due to deterioration in dispersibility of silica to a rubber.

(Carbon black)

Carbon black is not particularly limited, and those which are common in the tire industry can be used, such as GPF, FEF, HAF, ISAF, and SAF and the like. In particular, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, etc. can be appropriately used, and own company's synthetic products, etc. other than the above-described carbon blacks can be also appropriately used. They may be used alone, or two or more thereof may be used in combination.

The nitrogen adsorption specific surface area ($N_2SA$) of carbon black is preferably 50 $m^2$/g or more, more preferably 80 $m^2$/g or more, and further preferably 100 $m^2$/g or more, from the viewpoints of weather resistance and reinforcing property. Furthermore, it is preferably 250 $m^2$/g or less, and more preferably 220 $m^2$/g or less, from the viewpoints of dispersibility, fuel efficiency, fracture property, and durability. It is noted that the $N_2SA$ of carbon black in the present specification is a value measured according to A Method under JIS K 6217-2 "Carbon black for rubber industry-Fundamental characteristics-Part 2: Determination of specific surface area-Nitrogen adsorption methods-Single-point procedures".

When the rubber composition comprises the carbon black, the content thereof is, from the viewpoints of weather resistance and reinforcing property, preferably 1 part by mass or more, more preferably 3 parts by mass or more, and further preferably 5 parts by mass or more based on 100 parts by mass of the rubber component. Furthermore, it is preferably 40 parts by mass or less, more preferably 35 parts by mass or less, and further preferably 30 parts by mass or less, from the viewpoint of fuel efficiency.

(Other fillers)

As a reinforcing filler other than silica and carbon black, those conventionally and generally used in the rubber industry can be compounded, such as aluminium hydroxide, calcium carbonate, alumina, clay, and talc.

The content of silica in the total 100% by mass of silica and carbon black is preferably 30% by mass or more, more preferably 40% by mass or more, further preferably 50% by mass or more, and particularly preferably 55% by mass or more. Furthermore, it is preferably 99% by mass or less, more preferably 97% by mass or less, and further preferably 95% by mass or less.

The total content of silica and carbon black based on 100 parts by mass of the rubber component is preferably 40 parts by mass or more, more preferably 50 parts by mass or more, and further preferably 55 parts by mass or more, from the viewpoint of abrasion resistance. Furthermore, it is preferably 180 parts by mass or less, more preferably 160 parts by mass or less, and further preferably 140 parts by mass or less, from the viewpoint of suppressing lowering in fuel efficiency and abrasion resistance.

(Silane coupling agent)

Silica is preferably used in combination with a silane coupling agent. Examples of the silane coupling agent include, but not particularly limited to, for example, silane coupling agents having a sulfide group such as bis(3-triethoxysilylpropyl)disulfide and bis(3-triethoxysilylpropyl)tetrasulfide; silane coupling agents having a mercapto group such as 3-mercaptopropyl trimethoxy silane, and NXT-Z100, NXT-Z45, and NXT manufactured by Momentive Performance Materials; silane coupling agents having a vinyl group such as vinyltriethoxysilane and vinyltrimethoxysilane; silane coupling agents having an amino group such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane, and the like. Among them, silane coupling agents having a sulfide group are preferable. These silane coupling agents may be used alone, or two or more thereof may be used in combination.

When the rubber composition comprises the silane coupling agent (preferably, the silane coupling agent having a sulfide group), the content thereof is, from the viewpoint of increase in the dispersibility of silica, preferably 8.0 parts by mass or more, more preferably 8.5 parts by mass or more, further preferably 9.0 parts by mass or more, and particularly preferably 9.5 parts by mass or more based on 100 parts by mass of the silica. Furthermore, it is preferably 18 parts by mass or less, more preferably 16 parts by mass or less, further preferably 14 parts by mass or less, and particularly preferably 12 parts by mass or less, from the viewpoint of prevention of lowering in abrasion resistance.

<Resin component>

The rubber composition for a tread according to the present invention comprises an adhesive resin as a resin component. Examples of the adhesive resin include a petroleum resin, a terpene-based resin, a rosin-based resin, a phenol-based resin, and a coumarone-based resin, which are commonly used in the tire industry. They may be used alone, or two or more thereof may be used in combination. Among them, the petroleum resin is appropriately used.

Examples of the petroleum resin include, but not particularly limited to, an aliphatic-based petroleum resin, an aromatic-based petroleum resin, and an aliphatic/aromatic copolymer-based petroleum resin. They may be used alone, or two or more thereof may be used in combination. As the aliphatic-based petroleum resin, a resin obtained by cationically polymerizing an unsaturated monomer such as isoprene or cyclopentadiene, which is a petroleum fraction corresponding to C4-C5 (C5 fraction) (also referred to as a C5-based petroleum resin) can be used. As the aromatic-based petroleum resin, a resin obtained by cationically polymerizing a monomer such as vinyltoluene, alkylstyrene, and indene, which is a petroleum fraction corresponding to C8-C10 (C9 fraction) (also referred to as a C9-based petroleum resin) can be used. As the aliphatic/aromatic copolymer-based petroleum resin, a resin obtained by copolymerizing the above-described C5 fraction and C9 fraction (also referred to as a C5-C9-based petroleum resin) is used. Moreover, those obtained by being hydrogenated with the above-described petroleum resin may be used. Among them, the C5-C9-based petroleum resin and a dicyclopentadiene resin (DCPD resin) are appropriately used.

As the C5-C9-based petroleum resin, for example, commercially available products are appropriately used, such as PRG-80, PRG-140 manufactured by Zibo Luhua Hongjin New Material Co., Ltd., G-100 manufactured by Shandong Qilong Chemical Co., Ltd., Petrotack (registered trademark) 60, Petrotack (registered trademark) 70, Petrotack (registered trademark) 90, Petrotack (registered trademark) 100, Petrotack (registered trademark) 100V, and Petrotack (registered trademark) 90HM manufactured by Tosoh Corporation.

The terpene-based resin has a lower SP value than other adhesive resins such as an aliphatic-based petroleum resin, an aromatic-based petroleum resin, a phenolic-based resin, a rosin-based resins, and a coumarone-based resin, the value being between the SBR (SP value: 8.9) and the BR (SP value: 8.2), which is preferable from the viewpoint of compatibility with rubber components. Among them, a terpene styrene resin is appropriately used since it is particularly compatible with both the SBR and the BR and sulfur is easily dispersed in the rubber component.

Examples of the terpene-based resin include, but not particularly limited to, a polyterpene resin obtained by polymerizing a terpene compound; a terpene aromatic resin obtained by copolymerizing an aromatic compound with a terpene compound; an aromatic modified terpene resin obtained by modifying a terpene resin with an aromatic compound;

and hydrogenated products thereof, etc. The terpene aromatic resin is preferably a terpene phenol resin, and the aromatic modified terpene resin is preferably a terpene styrene resin.

The polyterpene resin is a resin having at least one selected from terpene compounds such as $\alpha$-pinene, $\beta$-pinene, limonene, and dipentene as a raw material. The terpene phenol resin is a resin having the above-described terpene compound and a phenol-based compound as raw materials. The terpene styrene resin is a resin having the above-described terpene compound and a styrene as raw materials. The polyterpene resin and the terpene styrene resin may be hydrogenated resins (a hydrogenated polyterpene resin, a hydrogenated terpene styrene resin). Hydrogenation to the terpene-based resin can be performed by a known method, and a commercially available hydrogenated resin can be used.

Any one of the above-listed terpene-based resins may be used alone, or two or more thereof may be used in combination. In the present invention, a commercially available product may be used as the terpene-based resin. Examples of such commercially available products include those manufactured and sold by Yasuhara Chemical Co., Ltd. and the like.

Example of the rosin-based resin include, but not particularly limited to, for example, a natural resin rosin and a rosin-modified resin obtained by modifying it with hydrogenation, disproportionation, dimerization, esterification, or the like.

The phenol-based resin include, but not particularly limited to, a phenol formaldehyde resin, an alkylphenol formaldehyde resin, an alkylphenol acetylene resin, an oil-modified phenol formaldehyde resin, and the like.

The coumarone-based resin is a resin containing coumarone as a main component, for example, a coumarone resin, a coumarone indene resin, a copolymer resin containing coumarone, indene, and styrene as main components, and the like.

The content of the resin component is, from the viewpoints of processability, fuel efficiency, abrasion resistance, and chipping resistance, 4.0 parts by mass or more, preferably 4.5 parts by mass or more, more preferably 5.0 parts by mass or more, further preferably 6.0 parts by mass or more, and particularly preferably 7.0 parts by mass or more based on 100 parts by mass of the rubber component. Furthermore, it is preferably 40 parts by mass or less, more preferably 35 parts by mass or less, further preferably 30 parts by mass or less, and particularly preferably 20 parts by mass or less, from the viewpoints of abrasion resistance and wet grip performance.

The softening point of the resin component is preferably 160°C or lower, more preferably 145°C or lower, and further preferably 130°C or lower, from the viewpoint of wet grip performance. Furthermore, the softening point is preferably 20°C or higher, more preferably 35°C or higher, and further preferably 50°C or higher. It is noted that in the present invention, the softening point is a temperature at which a sphere drops when the softening point specified in JIS K 6220-1: 2001 is measured with a ring and ball softening point measuring device.

The weight-average molecular weight (Mw) of the resin component is preferably 300 or more, more preferably 400 or more, and further preferably 500 or more, from the viewpoints of less tendency to volatilization and a good wet grip performance. Furthermore, the Mw is preferably 15,000 or less, more preferably 10,000 or less, and further preferably 8,000 or less.

The SP value of the resin component is preferably in the range of 8 to 11, more preferably in the range of 8 to 10, and further preferably in the range of 8.3 to 9.5, from the viewpoint of a good compatibility with the rubber component (particularly the SBR). When a resin having a SP value within the above-described ranges is used, its compatibility with the SBR and BR improves, and the abrasion resistance and breaking elongation can be improved.

<Other compounding agents>

The rubber composition for a tread according to the present invention can appropriately comprise compounding agents conventionally and generally used in the tire industry, for example, vulcanizing agents, vulcanization accelerators, such as an oil, a wax, a processing aid, an antioxidant, a stearic acid, a zinc oxide, a vulcanizing agent such as sulfur, a vulcanization accelerator and the like, in addition to the above-described components.

Examples of the oil include, for example, mineral oils such as aromatic oil, process oil, and paraffin oil, and the like. Among them, process oil is preferably used for environmental loading reduction.

When rubber composition comprises the oil, the content thereof is, from the viewpoint of processability, preferably 10 parts by mass or more, more preferably 15 parts by mass or more, and further preferably 20 parts by mass or more based on 100 parts by mass of the rubber component. Furthermore, it is preferably 80 parts by mass or less, more preferably 70 parts by mass or less, and further preferably 60 parts by mass or less, from the viewpoint of abrasion resistance. It is noted that in the present specification, the content of oil also includes an amount of oil contained in an oil-extended rubber.

When rubber composition comprises the wax, the content thereof is, from the viewpoint of weather resistance of the rubber, preferably 0.5 parts by mass or more, and more preferably 1 part by mass or more based on 100 parts by mass of the rubber component. Furthermore, it is preferably 10 parts by mass or less, and more preferably 5 parts by mass or less, from the viewpoint of whitening of the tire by bloom.

Examples of the processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. They may be used alone, or two or more thereof may be used in combination. Among them, the fatty acid metal salt, the amide ester, and the mixture of the fatty acid metal salt and the amide ester or the fatty acid amide are preferable, and the mixture of the fatty acid metal salt and the fatty acid amide is particularly preferable. Specifically, processing aid includes, for example, a fatty acid soap-based processing aid such as EF44 and WB16 manufactured by Schill+Seilacher GmbH.

When rubber composition comprises the processing aid, the content thereof is, from the viewpoint of demonstrating an effect of improvement in processability, preferably 0.5 parts by mass or more, and more preferably 1 part by mass or more based on 100 parts by mass of the rubber component. Furthermore, it is preferably 10 parts by mass or less, and more preferably 8 parts by mass or less, from the viewpoints of abrasion resistance and breaking strength.

Examples of the antioxidant include, but not particularly limited to, for example, each amine-based, quinoline-based, quinone-based, phenol-based, and imidazole-based compound, and anti-aging agents such as a carbamic acid metal salt, preferably, phenylenediamine-based anti-aging agents such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline-based anti-aging agents such as 2,2,4-trimethyl-1,2-dihydroquinoline polymer and 6-ethoxy-2,2,4-trimethyl-1,2-dihydroquinoline. These anti-aging agents may be used alone, or two or more thereof may be used in combination.

When rubber composition comprises the antioxidant, the content thereof is, from the viewpoint of ozone crack resistance of a rubber, preferably 0.5 parts by mass or more, and more preferably 1 part by mass or more based on 100 parts by mass of the rubber component. Furthermore, it is preferably 10 parts by mass or less, and more preferably 5 parts by mass or less, from the viewpoints of abrasion resistance and wet grip performance.

When rubber composition comprises the stearic acid, the content thereof is, from the viewpoint of processability, preferably 0.5 parts by mass or more, and more preferably 1 part by mass or more based on 100 parts by mass of the rubber component. Furthermore, it is preferably 10 parts by mass or less, and more preferably 5 parts by mass or less, from the viewpoint of vulcanization rate.

When rubber composition comprises the zinc oxide, the content thereof is, from the viewpoint of processability, preferably 0.5 parts by mass or more, and more preferably 1 parts by mass or more based on 100 parts by mass of the rubber component. Furthermore, it is preferably 10 parts by mass or less, and more preferably 5 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

When rubber composition comprises sulfur as the vulcanizing agent, the content thereof is, from the viewpoints of ensuring sufficient vulcanization reaction and obtaining good grip performance and abrasion resistance, preferably 0.5 parts by mass or more, and more preferably 1 part by mass or more based on 100 parts by mass of the rubber component. Furthermore, it is preferably 3.0 parts by mass or less, more preferably 2.5 parts by mass or less, and further preferably 2.0 parts by mass or less, from the viewpoint of deterioration.

Examples of the vulcanizing agent other than sulfur include, for example, vulcanizing agents containing a sulfur atom such as TACKIROL V-200 manufactured by Taoka Chemical Co., Ltd., DURALINK HTS (1,6-hexamethylene-dithioic sodium sulfate dihydrate) manufactured by Flexsys, and KA9188 (1,6-bis(N,N'-dibenzylthiocarbamoyl dithio)hexane) manufactured by LANXESS, organic peroxides such as dicumyl peroxide, and the like.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazolin-based, and xanthate-based vulcanization accelerators. Among them, the sulfenamide-based vulcanization accelerator is preferable in that a desired effect can be appropriately obtained.

Examples of the sulfenamide-based vulcanization accelerator include CBS (N-cyclohexyl-2-benzothiazolylsulfenamide), TBBS (N-t-butyl-2-benzothiazolylsulfenamide), N-oxyethylene-2- benzothiazolylsulfenamide, N,N'-diisopropyl-2-benzothiazolylsulfenamide, N,N-dicyclohexyl-2-benzothiazolylsulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotolylguanidine, orthotolylbiguanidine, and the like. They may be used alone, or two or more thereof may be used in combination.

When rubber composition comprises the vulcanization accelerator, the content thereof is preferably 1.0 part by mass or more, and more preferably 1.5 parts by mass or more based on 100 parts by mass of the rubber component. Furthermore, it is preferably 8 parts by mass or less, more preferably 7 parts by mass or less, and further preferably 6 parts by mass or less. When the content of the vulcanization accelerator is within the above-described ranges, breaking strength and elongation tend to be secured.

The rubber composition according to the present invention can be produced by a method of kneading the components other than the vulcanizing agents and the vulcanization accelerators among the above-described components, to which then adding the vulcanizing agents and the vulcanization accelerators to further knead them, by a known kneader used in the common rubber industry, such as, for example, a Banbury mixer or kneader, and an open roll, which can be manufactured by a known method, followed by vulcanizing them, and the like.

[Tire]

The tire according to the present invention is a tire comprising a tread composed of the rubber composition for a tread. The tire can be used as a heavy duty tire, e.g. for a truck and a bus, etc. Furthermore, the tire according to the present invention is appropriate for running on a punishing road (an unpaved rough road) since it has good abrasion resistance and chipping resistance.

The tire comprising a tread composed of a rubber composition can be manufactured by a conventional method using the rubber composition for a tread. That is, the tire can be manufactured by extruding an unvulcanized rubber composition compounded with each of the above-described components based on the rubber component as necessary in accordance with a tread shape, attaching it with other tire members on a tire forming machine, and molding them in a usual manner, thereby forming an unvulcanized tire, followed by heating and pressurizing this unvulcanized tire in a vulcanizing machine.

FIG. 1 shows an example of a development of a tread pattern of the heavy duty tire according to an embodiment of the present invention being developed on a plane surface, though the present invention is not limited to this. A tread part 2 composing the heavy duty tire according to the present invention has center transverse grooves 9, center sipes 13, middle transverse grooves 15, and shoulder transverse grooves 21, extending in a width direction with respect to circumferential grooves 3, 4, and 5 continuously extending in a tire circumferential direction (extending linearly along the tire circumferential direction in the example of FIG. 1), as shown in FIG. 1. The tread has 3.0% or more, preferably 3.2% or more, more preferably 3.5% or more, further preferably 3.7% or more, and particularly preferably 3.9% or more of difference (S1-S2) between a ratio S1 of a circumferential groove area to a contact area and a ratio S2 of a transverse groove area to the contact area when the tread is pressed against a plane surface with a normal load applied thereto in a normal state where it is mounted to a normal rim and inflated to a normal internal pressure. An upper limit value of the above-described difference between S1 and S2 is 7.0% or less, preferably 5.0% or less, from the viewpoints of maintaining the rigidity of the tread part and increasing the abrasion resistance and chipping resistance.

It is noted that the "transverse groove" in the present specification is a groove or sipe traversing a center land part 6, a middle land part 7, or a shoulder land part 8 divided by the circumferential grooves 3, 4, and 5, and refers to that where a straight line joining both ends in a width direction is inclined at angle of 0 to 30° relative to a tire width direction. The above-described groove and sipe may or may not communicate with the circumferential grooves at its end. Here, the "groove" refers to a recess of width greater than at least 2.0 mm, and the "sipe" refers to a thin cut of width of 2.0 mm or less (preferably 0.5 to 2.0 mm).

The "normal rim" shall be a rim defined for each tire by a standard on which a tire is based, in a standard system including the standard, for example, a standard rim for JATMA, a "Design Rim" for TRA, and a "Measuring Rim" for ETRTO.

The "normal inner pressure" shall be a pneumatic pressure defined for each tire by the above described standard, for example, a maximum pneumatic pressure for JATMA, a maximum value described in the table "TIRE LOAD LIMITS AT VARIOUS COLD INFLATION PRESSURES" for TRA, and an "INFLATION PRESSURE" for ETRTO.

The "normal load" shall be a load defined for each tire by the above described standard, for example, a maximum load capacity for JATMA, a maximum value described in the table "TIRE LOAD LIMITS AT VARIOUS COLD INFLATION PRESSURES" for TRA, and a "LOAD CAPACITY" for ETRTO.

In FIG. 1, the tread part 2 is provided with a circumferential groove continuously extending in a tire circumferential direction. The circumferential groove of the present invention includes one center circumferential groove 3 provided on a tire equator C, middle circumferential grooves 4 each provided on each side of the center circumferential groove 3, and a pair of shoulder circumferential grooves 5, 5 arranged between each of the middle circumferential grooves 4,4 and a tread edge Te at the outside in the tire axial direction. In addition, the number of the circumferential grooves is not particularly limited and may be, for example, 1 to 4. Furthermore, the circumferential grooves 3, 4, and 5 extend in a zigzag shape, though they are not limited to such aspect and may extend, for example, a straight or wavy shape.

The "tread edge" Te is considered as a clear edge when identified by the clear edge. However, if the edge cannot be identified, it is defined as a ground contact position at the outermost side in a tire axial direction when a normal load is applied to a tire in a normal state with no load is applied where it is mounted to a normal rim and inflated to a normal internal pressure and brought into contact with a plane surface at a camber angle of 0 degrees.

In FIG. 1, the center circumferential direction groove 3 extends in a zigzag shape. The center circumferential groove 3 of the present invention alternately includes a center long side part 3A and a center short side part 3B. The center long side part 3A is inclined to one side with respect to the tire circumferential direction. The center short side part 3B is inclined in an opposite direction with respect to the center long side part 3A. Such center circumferential groove 3 can effectively collect water films between tread surfaces of land parts on both sides of the center circumferential groove 3, thereby enhancing drainage performance. Furthermore, since the center short side part 3B has a greater angle $\theta 2$ relative to the tire circumferential direction, a force is applied in a direction to close the center short side part 3B during straight running, thereby suppressing the deformation of the land parts in the vicinity of the center short side part 3B in the circumferential direction and reducing slippage against the tread surfaces. As a result, heel-and-toe wear is suppressed.

The center circumferential groove 3 has a zigzag top 3h that is convex toward one side in the tire axial direction (right side in FIG. 1) at an intersection of the center long side 3A and the center short side 3B and a zigzag top 3k that is convex toward the other side in the tire axial direction (left side in FIG. 1) at the intersection of the center long side 3A and the center short side 3B.

The angle $\theta 1$ of the center long side part 3A relative to the tire circumferential direction is preferably 0.5 to 6.5 degrees. The angle $\theta 2$ of the center short side part 3B relative to the tire circumferential direction is preferably 5 to 15 degrees. With the above-described ranges, drainage performance can be secured and decrease in the rigidity of the land part can be suppressed.

From the viewpoints of increasing the rigidity of the land parts on both sides of the center circumferential groove 3 and reducing slippage against the tread surfaces of the land parts on both sides of the center circumferential groove 3, a ratio L0/L2 of a length L0 in the tire circumferential direction of the center long side part 3A and a length L2 in the tire circumferential direction of the center the short side part 3B is preferably 1.3 to 2.3.

By having each of such circumferential grooves 3 to 5, the tread part 2 is provided with each pair of center land parts 6, 6, middle land parts 7, 7, and shoulder land parts 8, 8. The center land part 6 is formed between the center circumferential groove 3 and the middle circumferential groove 4. The middle land part 7 is formed between the middle circumferential grooves 4 and the shoulder circumferential groove 5. The shoulder land part 8 is formed between the shoulder circumferential groove 5 and the tread end Te.

The center land part 6 is provided with an open type center sipe 13 that connects the center circumferential groove 3 and the middle circumferential groove 4. Since such sipe deforms in a direction to close the width when the block edge in the tire circumferential direction of the center land part 6 is in contact with the ground, the adjacent wall surfaces of the sipes closely adhere to and support each other, thereby suppressing decrease in the rigidity of the land parts. Therefore, the center sipe 13 enhances the drainage performance and abrasion resistance with good balance in a center block 11 where a high ground pressure acts and it is difficult to drain water. The center sipe 13 extends in a zigzag shape, though it is not limited to such aspect and may extend, for example, in a wavy, sinusoidal, or straight shape.

The center land part 6 is provided with a plurality of center transverse grooves 9 in the tire circumferential direction. The center transverse groove 9 extends in a straight shape, though it is not limited to such aspect and may extend, for example, in a wavy, sinusoidal, or zigzag shape.

The middle land part 7 is provided with a plurality of middle transverse grooves 15 in the tire circumferential direction. The middle transverse groove 15 extends in a straight shape, though it is not limited to such aspect and may extend, for example, in a wavy, sinusoidal, or zigzag shape.

The shoulder land part 8 is provided with a plurality of shoulder transverse grooves 21 in the tire circumferential direction. The shoulder transverse groove 21 extends in a straight shape, though it is not limited to such aspect and may extend, for example, in a wavy, sinusoidal, or zigzag shape.

EXAMPLE

Hereinafter, the present invention will be described based on Examples. However, the present invention is not limited to these examples only.

Hereinafter, various chemicals used in Examples and Comparative examples will be collectively shown.

NR: TSR20
SBR: SBR1502 (E-SBR, styrene content: 23.5% by mass, vinyl content: 18 mol%, Mw: 420,000) manufactured by JSR Corporation
BR: UBEPOL BR (registered trademark) 150B (vinyl bond content: 1.5 mol%, content of cis-1,4 bond: 97%, Mw: 440,000) manufactured by Ube Industries, Ltd.
Carbon black: Diamond Black N220 ($N_2SA$: 115 $m^2/g$) manufactured by Mitsubishi Chemical Corporation
Silica 1: Zeosil Premium 200 MP ($N_2SA$: 210 $m^2/g$) manufactured by Solvay

Silica 2: Zeosil 115GR ($N_2SA$: 110 $m^2$/g) manufactured by Rhodia Silane coupling agent: Si266 (bis(3-triethoxysilylpropyl)disulfide) manufactured by Evonik Degussa GmbH

Adhesive resin 1: Petrotack 100V (C5-C9-based petroleum resin, softening point: 96°C, Mw: 3,800, SP value: 8.3) manufactured by Tosoh Corporation

Adhesive resin 2: YS resin TO125 (terpene styrene resin, softening point: 125°C, Mw: 800, SP value: 8.7) manufactured by Yasuhara Chemical Co., Ltd.

Anti-aging agent: Nocrac 6C (N-(1,3-dimethylbutyl)-N'-phenyl-p-phenylenediamine) manufactured by OUCHI SHINKO CHEMICAL INDUSTRIAL CO., LTD.

Stearic acid: BEAD STEARIC ACID CAMELLIA manufactured by NOF CORPORATION

Zinc oxide: Zinc flower No.1 manufactured by Mitsui Mining & Smelting Co., Ltd.

Sulfur: Powdered sulfur manufactured by Karuizawa Sulfur Co, Ltd.

Vulcanization accelerator: Nocceler CZ (N-cyclohexyl-2-benzothiazolylsulfenamide (CBS)) manufactured by OUCHI SHINKO CHEMICAL INDUSTRIAL CO., LTD.

(Examples and Comparative examples)

According to the formulation shown in Table 1, chemicals other than sulfur and vulcanization accelerators were kneaded for 5 minutes until the discharge temperature reached 170°C using a 1.7 L closed Banbury mixer to obtain a kneaded product. Furthermore, the obtained kneaded product was kneaded (remilled) again for 4 minutes at the discharge temperature of 150°C by the Banbury mixer. Next, using a biaxial open roll, sulfur and vulcanization accelerators were added to the obtained kneaded product and kneaded for 4 minutes to 105°C to obtain an unvulcanized rubber composition. The obtained unvulcanized rubber composition was press-vulcanized at 170°C for 12 minutes to produce a rubber composition for testing.

Furthermore, the unvulcanized rubber composition was extruded into a tire tread shape with an extruder equipped with a mouthpiece having a predetermined shape and attached together with other tire members to form an unvulcanized tire, followed by press-vulcanized to produce a tire for testing (12R22.5, a tire for a truck/bus).

The obtained unvulcanized rubber composition, vulcanized rubber composition, and tire for testing were evaluated as follows. The evaluation results are shown in Table 1.

<Processability test>

For each unvulcanized rubber composition, in accordance with the measurement method of Mooney viscosity conforming to JIS K 6300-1 "Rubber, unvulcanized-Physical property- Part 1: Determination of Mooney viscosity and pre-vulcanization characteristics with Mooney viscometer", Mooney viscosity ($ML_{1+4}$) was measured under the temperature condition of 130°C. The results are shown by an index according to the following equation as Mooney viscosity of Comparative example 1 being 100. The results indicate that the larger the processability index is, the lower the Mooney viscosity is and the better the processability is.

$$(\text{Processability index}) = (ML_{1+4} \text{ of Comparative example 1}) / (ML_{1+4} \text{ of each compounding}) \times 100$$

<Fuel efficiency>

Using a viscoelasticity spectrometer VES manufactured by Iwamoto Seisakusyo Co., Ltd., loss tangent (tan $\delta$) of each vulcanized rubber composition was measured under conditions of temperature of 70°C, initial strain of 10%, dynamic strain of 2%, and frequency of 10Hz. The results are shown by an index according to the following equation as tan $\delta$ in Comparative example 1 being 100. The results indicate that the larger the index is, the better the fuel efficiency is.

$$(\text{Fuel efficiency index}) = (\tan \delta \text{ in Comparative Example 1}) / (\tan \delta \text{ in each compounding example}) \times 100$$

<Wet grip performance test>

Each tire for testing was mounted on all wheels of a truck of maximum load of 10 tons burden (2-D wheels), and a braking distance from an initial speed of 100 km/h in a wet road surface was measured. Comparative example 1 was index-displayed as being 100 by the following equation. The results indicate that the larger the index is, the better the wet grip performance is. In addition, the minimum target value is set to be 100 or more, preferably 105 or more.

$$\text{(Wet grip performance index)}=\text{(braking distance of tire in}$$

$$\text{Comparative example 1)}/\text{(braking distance of each tire for testing)}\times 100$$

<Abrasion resistance>

Each tire for testing was mounted on all wheels of a truck of maximum load of 10 tons burden (2-D wheels), and a groove depth of a tire tread part after 8,000 km of running distance was measured to calculate a running distance when the groove depth of the tire is reduced by 1 mm. The results are shown with an index by the following equation as a running distance when the tire groove in Comparative example 1 is reduced by 1 mm being 100. The results indicate that the larger the index is, the better the Abrasion resistance is.

$$\text{(Abrasion resistance index)}=\text{(running distance when a tire}$$

$$\text{groove of each tire for testing is reduced by 1 mm)}/\text{(running distance}$$

$$\text{when a tire groove in Comparative example 1 is reduced by 1 mm)}\times 100$$

<Chipping resistance>

Each tire for testing was mounted on all wheels of a truck of maximum load of 10 tons burden (2-D wheels), and a block chipping state after 8,000 km of running distance was visually observed and rated. The results are shown with an index by the following equation as the rating of Comparative example 1 being 100. The results indicate that the larger the index is, the less the block chipping occurs and the higher the chipping resistance is.

$$\text{(Chipping resistance index)}=\text{(rating of each tire for testing)}/\text{(Rating of}$$

$$\text{Comparative example 1)}\times 100$$

It is noted that a performance target value for an overall performance of processability, fuel efficiency, wet grip performance, abrasion resistance, and chipping resistance (an average value of processability, fuel efficiency, wet grip performance, abrasion resistance, and chipping resistance) is set to be 103 or more, preferably 105 or more, and more preferably 107 or more.

Table 1

| | Example | | | | | | | | |
|---|---|---|---|---|---|---|---|---|---|
| | 1 | 2 | 3 | 4 | 5 | 6 | 7 | 8 | 9 |
| **Compounding amount (part by mass)** | | | | | | | | | |
| NR | 70 | 80 | 60 | 50 | 50 | 50 | 70 | 70 | 70 |
| SBR | 30 | — | 20 | 30 | 30 | 30 | 30 | 30 | 30 |
| BR | — | 20 | 20 | 20 | 20 | 20 | — | — | — |
| Carbon black | 25 | 25 | 25 | 40 | 5.0 | 5.0 | 25 | 25 | 25 |
| Silica 1 | 35 | 35 | 35 | 20 | 55 | 75 | 35 | 35 | 35 |
| Silica 2 | — | — | — | — | — | — | — | — | — |
| Silane coupling agent | 3.5 | 3.5 | 3.5 | 2.0 | 5.0 | 7.5 | 3.5 | 3.5 | 3.5 |
| Adhesive resin 1 | 5.0 | 5.0 | 5.0 | 5.0 | 5.0 | 5.0 | 10 | — | 5.0 |
| Adhesive resin 2 | — | — | — | — | — | — | — | 5.0 | — |
| Antioxidant | 1.0 | 1.0 | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 | 3.0 | 3.0 |
| Zinc oxide | 3.5 | 3.5 | 3.5 | 3.5 | 3.5 | 3.5 | 3.5 | 3.5 | 3.5 |
| Sulfur | 1.5 | 1.5 | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 | 1.5 | 1.5 |
| S1-S2 | 4.0 | 4.0 | 4.0 | 4.0 | 4.0 | 4.0 | 4.0 | 4.0 | 5.0 |
| **Index** | | | | | | | | | |
| Processability | 108 | 119 | 114 | 110 | 115 | 100 | 117 | 108 | 108 |
| Fuel efficiency | 105 | 109 | 108 | 104 | 110 | 112 | 105 | 107 | 108 |
| Wet grip performance | 121 | 109 | 119 | 122 | 129 | 133 | 119 | 123 | 118 |
| Abrasion resistance | 99 | 112 | 106 | 104 | 102 | 106 | 100 | 101 | 101 |
| Chipping resistance | 117 | 111 | 121 | 124 | 119 | 115 | 124 | 123 | 115 |

- continued -

| | Comparative example | | | | | | |
|---|---|---|---|---|---|---|---|
| | 1 | 2 | 3 | 4 | 5 | 6 | 7 |
| **Compounding amount (part by mass)** | | | | | | | |
| NR | 70 | 70 | 50 | 70 | 100 | — | 70 |
| SBR | — | 30 | 30 | 30 | — | 80 | 30 |
| BR | 30 | — | 20 | — | — | 20 | — |
| Carbon black | 55 | 50 | 40 | 25 | 25 | 25 | 25 |
| Silica 1 | — | 10 | 20 | 35 | 35 | 35 | — |
| Silica 2 | — | — | — | — | — | — | 35 |
| Silane coupling agent | - | 1.0 | 2.0 | 3.5 | 3.5 | 3.5 | 3.5 |
| Adhesive resin 1 | 5.0 | 3.0 | 2.0 | 5.0 | 5.0 | 5.0 | 5.0 |
| Adhesive resin 2 | — | — | — | — | — | — | — |
| Antioxidant | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 |
| Zinc oxide | 3.5 | 3.5 | 3.5 | 3.5 | 3.5 | 3.5 | 3.5 |
| Sulfur | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 |
| S1-S2 | 4.0 | 4.0 | 4.0 | 2.0 | 4.0 | 4.0 | 4.0 |
| **Index** | | | | | | | |
| Processability | 100 | 94 | 89 | 108 | 105 | 101 | 110 |
| Fuel efficiency | 100 | 89 | 95 | 97 | 105 | 89 | 105 |
| Wet grip performance | 100 | 105 | 104 | 110 | 99 | 105 | 105 |
| Abrasion resistance | 100 | 82 | 86 | 84 | 90 | 82 | 74 |
| Chipping resistance | 100 | 104 | 99 | 94 | 89 | 81 | 88 |

From the results in Table 1, it can be found that the heavy duty tire of the present invention comprising a tread composed of a rubber composition comprising a predetermined rubber components, a predetermined silica, and an adhesive resin, and having a predetermined range of difference between a ratio S1 of a circumferential groove area to a contact area and a ratio S2 of a transverse groove area to the contact area are good in the balance between its processability, fuel efficiency, wet grip performance, abrasion resistance, and chipping resistance.

EXPLANATION OF NUMERALS

| | |
|---|---|
| 1. | Heavy duty tire |
| 2. | Tread part |
| 3. | Center circumferential groove |
| 4. | Middle circumferential groove |
| 5. | Shoulder circumferential groove |
| 6. | Center land part |
| 7. | Middle land part |
| 8. | Shoulder land part |
| 9. | Center transverse groove |
| 13. | Center sipe |
| 15. | Middle transverse groove |
| 21. | Shoulder transverse groove |

**Claims**

**1.** A heavy duty tire (1) comprising a tread (2) composed of a rubber composition comprising 20 parts by mass or more of a silica having 175 m$^2$/g or more of a nitrogen adsorption specific surface area (N$_2$SA) as measured by a BET method according to ASTM D3037-93 and 4.0 parts by mass or more of an adhesive resin based on 100 parts by mass of a rubber component,

> wherein the rubber composition comprises an isoprene-based rubber and at least one of a styrene butadiene rubber and a butadiene rubber,
> **characterized in that**
> the tread (2) has 3.0% or more and 7.0% or less of difference between a ratio S1 of a circumferential groove (3, 4, 5) area to a contact area and a ratio S2 of a transverse groove (9, 15, 21) area to the contact area, wherein the transverse groove (9, 15, 21) is a groove or sipe where a straight line joining both ends in a width direction is inclined at an angle of 0 to 30° relative to a tire width direction, and
> wherein the difference between S1 and S2 is measured when the tread (2) is pressed against a plane surface with a normal load applied thereto in a normal state where it is mounted to a normal rim and inflated to a normal internal pressure, the normal rim being a rim defined for the tire (1) by a standard on which the tire (1) is based, the normal inner pressure being a pneumatic pressure defined for the tire (1) by the standard, and the normal load being a load defined for the tire (1) by the standard.

**2.** The heavy duty tire (1) of claim 1, wherein the styrene-butadiene rubber has a styrene content of 5 to 25% by mass, a vinyl content of 10 to 45 mol%, and a weight-average molecular weight of 200,000 or more

**3.** The heavy duty tire (1) of claim 1 or 2, wherein the rubber composition comprises 8 to 18 parts by mass of a silane coupling agent having a sulfide group based on 100 parts by mass of the silica.

**4.** The heavy duty tire (1) of any of claims 1 to 3, wherein the adhesive resin is at least one selected from the group consisting of a C5-based petroleum resin, a C5-C9-based petroleum resin, a C9-based petroleum resin, a terpene-based resin, and a rosin-based resin.

**Patentansprüche**

**1.** Schwerlastreifen (1), umfassend einen Laufstreifen (2), der mit einer Kautschukzusammensetzung gebildet ist, die 20 Massenteile oder mehr eines Siliciumdioxids, welches 175 m$^2$/g oder mehr einer spezifischen Stickstoffadsorptionsoberfläche (N$_2$SA) aufweist, gemessen durch ein BET-Verfahren gemäß ASTM D3037-93, und 4,0 Massenteile oder mehr eines Klebeharzes umfasst, bezogen auf 100 Massenteile einer Kautschukkomponente,

> wobei die Kautschukzusammensetzung einen Isopren-basierten Kautschuk und mindestens einen von einem Styrol-Butadien-Kautschuk und einem Butadienkautschuk umfasst, **dadurch gekennzeichnet, dass** der Laufstreifen (2) 3,0% oder mehr und 7,0% oder weniger an Differenz zwischen einem Verhältnis S1 einer Umfangsrillen (3, 4, 5)-Fläche zu einer Kontaktfläche und einem Verhältnis S2 einer Querrillen (9, 15, 21)-Fläche zu der Kontaktfläche aufweist,
wobei die Querrille (9, 15, 21) eine Rille oder ein Einschnitt ist, worin eine gerade Linie, die beide Enden in einer Breitenrichtung verbindet, in einem Winkel von 0 bis 30° relativ zu einer Reifenbreitenrichtung geneigt ist, und wobei die Differenz zwischen S1 und S2 gemessen ist, wenn der Laufstreifen (2) gegen eine ebene Oberfläche gedrückt ist, unter Aufbringung einer normalen Belastung in einem normalen Zustand, worin er auf eine normale Felge montiert ist und auf einen normalen Innendruck aufgepumpt ist, wobei die normale Felge eine Felge ist, die für den Reifen (1) durch eine Norm definiert ist, auf welcher der Reifen (1) basiert, der normale Innendruck ein Luftdruck ist, der für den Reifen (1) durch die Norm definiert ist, und die normale Belastung eine Belastung ist, die für den Reifen (1) durch die Norm definiert ist.

2.  Schwerlastreifen (1) nach Anspruch 1, wobei der Styrol-ButadienKautschuk einen Styrolgehalt von 5 bis 25 Massenprozent, einen Vinylgehalt von 10 bis 45 Molprozent und ein gewichtsmittleres Molekulargewicht von 200000 oder mehr aufweist.

3.  Schwerlastreifen (1) nach Anspruch 1 oder 2, wobei die Kautschukzusammensetzung, bezogen auf 100 Massenteile des Siliciumdioxids, 8 bis 18 Massenteile eines Silankopplungsmittels umfasst, das eine Sulfidgruppe aufweist.

4.  Schwerlastreifen (1) nach einem der Ansprüche 1 bis 3, wobei das Klebeharz mindestens eines ist, welches ausgewählt ist aus der Gruppe bestehend aus einem C5-basierten Petrolharz, einem C5-C9-basierten Petrolharz, einem C9-basierten Petrolharz, einem Terpen-basierten Harz und einem Kolophonium-basierten Harz.

## Revendications

1.  Pneumatique pour poids lourd (1) comprenant une bande de roulement(2) composée d'une composition de caoutchouc comprenant 20 parts en masse ou plus d'une silice ayant 175 m$^2$/g ou plus d'une surface spécifique d'adsorption d'azote ($N_2$SA) telle que mesurée par un procédé BET selon ASTM D3037-93 et 4,0 parts en masse ou plus d'une résine adhésive sur la base de 100 parts en masse d'un composant en caoutchouc,

    dans lequel la composition de caoutchouc comprend un caoutchouc à base d'isoprène et au moins un caoutchouc parmi un caoutchouc styrène butadiène et un caoutchouc butadiène,
    **caractérisé en ce que**
    la bande de roulement (2) a 3,0 % ou plus et 7,0 % ou moins de différence entre un rapport S1 d'une aire de rainure circonférentielle (3, 4, 5) sur une aire de contact et un rapport S2 d'une aire de rainure transversale (9, 15, 21) sur l'aire de contact,
    dans lequel la rainure transversale (9, 15, 21) est une rainure ou une fente dans laquelle une ligne droite joignant les deux extrémités dans une direction de la largeur est inclinée sous un angle de 0 à 30° relativement à une direction de la largeur du pneumatique, et
    dans lequel la différence entre S1 et S2 est mesurée quand la bande de roulement (2) est pressée contre une surface plane avec une charge normale appliquée sur celle-ci dans un état normal de montage sur une jante normale et de gonflage à une pression interne normale, la jante normale étant une jante définie pour le pneumatique (1) par un standard sur lequel est basé le pneumatique (1), la pression interne normale étant une pression de pneumatique définie pour le pneumatique (1) par le standard, et la charge normale étant une charge définie pour le pneumatique (1) par le standard.

2.  Pneumatique pour poids lourd (1) selon la revendication 1, dans lequel le caoutchouc styrène butadiène a une teneur en styrène de 5 à 25 % en masse, une teneur en vinyle de 10 à 45 % molaire, et une masse moléculaire moyenne de 200 000 ou plus.

3.  Pneumatique pour poids lourd (1) selon la revendication 1 ou 2, dans lequel la composition de caoutchouc comprend 8 à 18 parts en masse d'un agent de couplage au silane ayant un groupe sulfure sur la base de 100 parts en masse de la silice.

4.  Pneumatique pour poids lourd (1) selon l'une quelconque des revendications 1 à 3, dans lequel la résine adhésive est au moins une résine sélectionnée parmi le groupe constitué de : résine de pétrole à base de C5, résine de pétrole à base de C5-C9, résine de pétrole à base de C9, résine à base de terpène, et résine à base de colophane.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06279624 A
- WO 2019092365 A1
- US 20190061425 A1
- JP 2019131649 A
- JP 2019151743 A
- JP 2019026712 A
- EP 2799480 A1
- EP 3042790 A1
- EP 3023269 A1
- US 5042546 A